# EUROPÄISCHE PATENTANMELDUNG

(11) **EP 3 358 725 A1**
(43) Veröffentlichungstag der Anmeldung: **08.08.2018**
(21) Anmeldenummer: 17154962.9
(22) Anmeldetag: 07.02.2017
(51) Int. Cl.: H02K 9/12, H02K 11/25, H02K 7/18, H02K 11/04

(54) **ELEKTRISCHE MASCHINE MIT UNABHÄNGIGER ROTORKÜHLVORRICHTUNG, GENERATORANORDNUNG SOWIE WINDKRAFTANLAGE**

(71) Anmelder: Siemens Aktiengesellschaft, 80333 München (DE)
(72) Erfinder: Zeichfüßl, Roland, 94099 Ruhstorf a. d. Rott (DE)

(57) **Zusammenfassung**

Die Erfindung betrifft eine elektrische Maschine (1), mit einem Stator (2) und einem relativ zu dem Stator (2) drehbaren Rotor (3), wobei der Rotor (3) eine Mehrzahl von Permanentmagneten (5) umfasst, und mit einer Rotorkühlvorrichtung (8) zum Kühlen des Rotors (3), wobei die Rotorkühlvorrichtung (8) zumindest eine Kühleinrichtung (23) zum Bereitstellen eines Kühlluftstroms aufweist, wobei die Rotorkühlvorrichtung (8) eine Steuereinrichtung (22) aufweist, welche dazu ausgelegt ist, die zumindest eine Kühleinrichtung (23) zum Einstellen einer durch den Kühlluftstrom bereitgestellten Kühlleistung anzusteuern.

## Beschreibung

Die vorliegende Erfindung betrifft eine elektrische Maschine mit einem Stator und mit einem relativ zu dem Stator drehbaren Rotor, wobei der Rotor eine Mehrzahl von Permanentmagneten umfasst. Des Weiteren umfasst die elektrische Maschine eine Rotorkühlvorrichtung zum Kühlen des Rotors, wobei die Rotorkühlvorrichtung zumindest eine Kühleinrichtung zum Bereitstellen eines Kühlluftstroms aufweist. Zudem betrifft die vorliegende Erfindung eine Generatoranordnung mit einer solchen elektrischen Maschine. Schließlich betrifft die vorliegende Erfindung eine Windkraftanlage mit einer solchen Generatoranordnung.

Das Interesse richtet sich vorliegend auf permanenterregte elektrische Maschinen, welche als Generator verwendet werden. Beispielsweise können solche elektrischen Maschinen als Generatoren in Windkraftanlagen eingesetzt werden. Im Betrieb der elektrischen Maschine kann es der Fall sein, dass diese oberhalb der Nenndrehzahl betrieben werden. Dies ergibt sich beispielsweise, wenn die elektrische Maschine in einer Windkraftanlage eingesetzt wird und infolge von Windböen hohe Drehzahlen auftreten. Insbesondere wenn die elektrische Maschine als permanenterregte Synchronmaschine ausgebildet ist, steigt bei hohen Drehzahlen die Polradspannung deutlich an. Wenn die elektrische Maschine ausgangsseitig mit einem Umrichter beziehungsweise einer Umrichtervorrichtung verbunden ist, kann dies zu Schäden im Umrichter führen. Dies gilt vor allem dann, wenn die Temperatur der Permanentmagneten gering ist, da in diesem Fall die Polradspannung besonders hoch ist.

Bei elektrischen Maschinen am Umrichter kann die Klemmenspannung zumindest teilweise durch Feldschwächung begrenzt werden, sodass Schäden am Umrichter verhindert werden. Außerdem kann die elektrische Maschine so ausgelegt werden, dass für die gleiche Leistung eine niedrigere Polradspannung erzeugt wird. Hierzu kann die elektrische Maschine beziehungsweise der Stator der elektrischen Maschine eine niedrigere Windungszahl aufweisen. Häufig führt die niedrige Polradspannung aber zu Nachteilen bei der Auslegung. Vor allem kann sich ein geringerer Leistungsfaktor ergeben.

Permanenterregte elektrische Maschinen beziehungsweise Generatoren können statt an einem vollgesteuerten Umrichter auch an einem reinen Gleichrichter betrieben werden. Dies ist üblicherweise kostengünstiger. Jedoch ergibt sich hier der Nachteil, dass die Feldschwächung über den Betriebspunkt festgelegt ist und somit im Betrieb nicht verändert werden kann.

Es ist Aufgabe der vorliegenden Erfindung, eine Lösung aufzuzeigen, wie eine permanenterregte elektrische Maschine zuverlässiger als Generator betrieben werden kann.

Diese Aufgabe wird erfindungsgemäß durch eine elektrische Maschine, durch eine Generatoranordnung sowie durch eine Windkraftanlage gemäß den Merkmalen der jeweiligen unabhängigen Ansprüche gelöst. Vorteilhafte Weiterbildungen der vorliegenden Erfindung sind Gegenstand der abhängigen Ansprüche.

Eine erfindungsgemäße elektrische Maschine umfasst einen Stator. Des Weiteren umfasst die elektrische Maschine einen Rotor, welcher relativ zu dem Stator drehbar ist und welcher eine Mehrzahl von Permanentmagneten umfasst. Darüber hinaus umfasst die elektrische Maschine eine Rotorkühlvorrichtung zum Kühlen des Rotors, wobei die Rotorkühlvorrichtung zumindest eine Kühleinrichtung zum Bereitstellen eines Kühlluftstroms aufweist. Des Weiteren umfasst die Rotorkühlvorrichtung eine Steuereinrichtung, welche dazu ausgelegt ist, die zumindest eine Kühleinrichtung zum Einstellen einer durch den Kühlluftstrom bereitgestellten Kühlleistung anzusteuern.

Die elektrische Maschine ist als permanenterregte elektrische Maschine ausgebildet. Dies bedeutet, dass der Rotor der elektrischen Maschine eine Mehrzahl von Permanentmagneten umfasst. Zudem weist die elektrische Maschine den Stator auf, welcher beispielsweise eine entsprechende Wicklung umfassen kann. Beispielsweise kann die elektrische Maschine als permanenterregte Synchronmaschine ausgebildet sein. Die elektrische Maschine kann bevorzugt als Generator, beispielsweise in einer Windkraftanlage verwendet werden. Die elektrische Maschine umfasst zudem die Rotorkühlvorrichtung, welche dazu dient, den Rotor im Betrieb der elektrischen Maschine zu kühlen. Die Rotorkühlvorrichtung umfasst die zumindest eine Kühleinrichtung, mittels welcher ein Kühlluftstrom zum Kühlen des Rotors bereitgestellt wird. Mit anderen Worten wird durch die zumindest eine Kühleinrichtung dem Rotor Kühlluft zugeführt. Insbesondere wird mit der zumindest einen Kühleinrichtung ein Innenumluftstrom erzeugt. Der Kühlluftstrom wird also bevorzugt innerhalb eines Gehäuses der elektrischen Maschine geführt. Durch den Kühlluftstrom wird also eine Kühlleistung bereitgestellt, welche auf den Rotor wirkt beziehungsweise diesen kühlt.

Gemäß einem wesentlichen Aspekt der vorliegenden Erfindung weist die Rotorkühlvorrichtung eine Steuereinrichtung auf, mittels welcher die zumindest eine Kühleinrichtung angesteuert werden kann. Auf diese Weise kann die mit der zumindest einen Kühleinrichtung bereitgestellte Kühlleistung, welche auf den Rotor wirkt, eingestellt werden. Insbesondere kann die Kühlleistung unabhängig von einer Drehzahl des Rotors eingestellt werden. Dies ermöglicht es im Vergleich zu bekannten Rotorkühlvorrichtungen, welche beispielsweise auf der Welle angeordnete Lüfter umfassen, die Kühlleistung unabhängig von der Drehzahl des Rotors einzustellen. Beispielsweise kann dadurch erreicht werden, dass die Permanentmagnete des Rotors nicht oder in geringerem Umfang gekühlt werden, falls diese eine verhältnismäßig geringe Temperatur aufweisen. Damit kann erreicht werden, dass die Permanentmagnete erwärmt werden und folglich die Polradspannung reduziert wird. Auf diese Weise kann auch bei Drehzahlen oberhalb der Nenndrehzahl der elektrischen Maschine ein zuverlässiger Betrieb ermöglicht werden, ohne dass Schäden an der elektrischen Maschine oder an einem nachgeschalteten Umrichter drohen.

In einer Ausführungsform weist die Rotorkühlvorrichtung als die zumindest eine Kühleinrichtung einen Lüfter mit einem Lüfterrad zum Fördern des Kühlluftstroms und einem Lüftermotor zum Antreiben des Lüfterrads auf, wobei die Steuereinrichtung dazu ausgelegt ist, den Lüftermotor zum Einstellen der Kühlleistung anzusteuern. Die Rotorkühlvorrichtung kann als die zumindest eine Kühleinrichtung also einen Lüfter umfassen. Mit diesem Lüfter kann der Kühlluftstrom gefördert werden. Der Lüfter umfasst wiederum ein Lüfterrad, welches mit dem Lüftermotor angetrieben werden kann. Das Lüfterrad ist nicht mit der Welle der elektrischen Maschine verbunden. Um die Kühlleistung, welche auf den Rotor wirkt, einstellen zu können, kann die Steuereinrichtung den Lüftermotor ansteuern. Der Lüftermotor ist bevorzugt als elektrische Maschine ausgeführt. Es kann auch vorgesehen sein, dass die Steuereinrichtung einen separaten Umrichter ansteuert, welcher mit dem Lüftermotor verbunden ist. Beispielsweise kann die Steuereinrichtung den Lüftermotor aktivieren und/oder deaktivieren. Es kann auch vorgesehen sein, dass die Steuereinrichtung eine Drehzahl des Lüftermotors einstellen kann. Somit kann der Volumenstrom der Kühlluft und damit die erbrachte Kühlleistung gesteuert werden.

In einer weiteren Ausführungsform weist die Rotorkühlvorrichtung als die zumindest eine Kühleinrichtung einen Rückkühler zum Kühlen des Kühlluftstroms auf, wobei die Steuereinrichtung dazu ausgelegt ist, den Rückkühler zum Einstellen der Kühlleistung anzusteuern. Die Rotorkühlvorrichtung kann als die zumindest eine Kühleinrichtung den Rückkühler aufweisen. Insbesondere ist es vorgesehen, dass die Kühlvorrichtung sowohl den Lüfter als auch den Rückkühler als Kühleinrichtungen umfasst. Mithilfe des Rückkühlers kann die Luft, die beispielsweise von dem Rotor erwärmt wurde, wieder gekühlt werden. Der Rückkühler kann als Wärmetauscher ausgebildet sein. Der Wärmetauscher kann von einem Kühlmedium durchströmt werden, durch welche der dem Wärmetauscher zugeführte Kühlluftstrom gekühlt werden kann. Es kann auch vorgesehen sein, dass die Steuereinrichtung den Wärmetauscher beziehungsweise den Rückkühler derart angesteuert, dass dieser den Kühlluftstrom nicht kühlt. In diesem Fall kann dem Wärmetauscher kein Kühlmedium zugeführt werden. Mithilfe der Steuereinrichtung kann der Rückkühler angesteuert werden und somit beeinflusst werden, in welchem Umfang der Kühlluftstrom mittels des Rückkühlers gekühlt wird. Hierzu kann beispielsweise mittels der Steuereinrichtung der Volumenstrom des Kühlmittels, welches den Rückkühler durchströmt, eingestellt werden. Dies ermöglicht eine einfache und zuverlässige Anpassung der Temperatur des Kühlluftstroms. Der Volumenstrom des Kühlmittels kann beispielsweise durch ein Ventil auch komplett gesperrt werden.

Bevorzugt weist die Kühlvorrichtung zumindest ein Luftleitelement auf, welches den durch den Rückkühler gekühlten Kühlluftstrom zu dem Rotor führt. Somit kann die von dem Rückkühler gekühlte Kühlluft unmittelbar zu dem Rotor geführt werden. Auf diese Weise können die Permanentmagnete des Rotors optimal gekühlt werden, falls sich diese im Betrieb der elektrischen Maschine erwärmt haben. Es kann auch vorgesehen sein, dass der von dem Wärmetauscher gekühlte Kühlluftstrom zunächst zu dem Lüfter und anschließend zu dem Rotor geführt wird. Zur Verringerung der axialen Länge der elektrischen Maschine kann es erforderlich sein, dass die Kühlluft nach dem Passieren des Wärmetauschers und gegebenenfalls dem Lüfter über zumindest einen Statorwickelkopf geführt wird, bevor er zu den Magneten gelangt. Die elektrische Maschine kann ein Gehäuse aufweisen, in welchem das zumindest eine Luftleitelement angeordnet ist. Insbesondere sind mehrere Luftleitelemente in dem Gehäuse der elektrischen Maschine vorgesehen. Diese Luftleitelemente dienen dazu, den Kühlmittelstrom zu dem Rotor zu führen.

Dabei ist es insbesondere vorgesehen, dass das zumindest eine Luftleitelement dazu ausgelegt ist, den Kühlluftstrom in radialer Richtung der elektrischen Maschine zu einem Mittelbereich des Rotors zu führen. Der Kühlmittelstrom kann also mithilfe des Lüfters von dem Rückkühler zu dem Rotor geführt werden. Dabei kann es vorgesehen sein, dass der Kühlmittelstrom zwischen dem Gehäuse der elektrischen Maschine und den Luftleitelementen geführt wird. Insbesondere soll der Kühlluftstrom in radialer Richtung mittig auf den Rotor auftreffen. Somit können die Permanentmagneten des Rotors effizient gekühlt werden.

In einer weiteren Ausführungsform weist die elektrische Maschine zumindest einen Kühlkanal auf, welcher den zu dem Rotor geführten Kühlluftstrom in axialer Richtung der elektrischen Maschine entlang des Rotors führt. Der Rotor kann beispielsweise ein Blechpaket aufweisen, an welchem die Permanentmagneten gehalten sind. In diesem Blechpaket kann der zumindest eine Kühlkanal ausgebildet sein. Es kann auch vorgesehen sein, dass der zumindest eine Kühlkanal durch einen Luftspalt zwischen dem Rotor und dem Stator gebildet wird. Wie bereits erläutert, soll der Kühlluftstrom von dem Wärmetauscher mittig dem Rotor geführt werden. Von dort kann Kühlluftstrom entlang der axialen Richtung der elektrischen Maschine von der Mitte nach außen zu beiden Seiten geführt werden. Somit können die Permanentmagneten in dem Rotor von innen beziehungsweise der Mitte nach außen gekühlt werden. Im Anschluss daran kann die Kühlluft dann wieder zu dem Rückkühler geführt werden, um die Kühlluft entsprechend abzukühlen.

Alternativ dazu kann es vorgesehen sein, dass der Kühlluftstrom mittels des zumindest einen Luftleitelement in radialer Richtung zu einem ersten Seitenbereich des Rotors geführt wird. Auch hier kann dann zumindest ein Kühlkanal vorgesehen sein, durch welchen der Kühlluftstrom in axialer Richtung entlang des Rotors geführt wird. Somit kann der Kühlluftstrom beispielsweise von dem ersten Seitenbereich zu einem gegenüberliegenden, zweiten Seitenbereich des Rotors geführt werden. Auch bei dieser Ausgestaltung kann eine effiziente Kühlung der Permanentmagnete erreicht werden.

Weiterhin ist es vorteilhaft, wenn das zumindest eine Luftleitelement dazu ausgelegt ist, den Kühlluftstrom von dem Rotor zu dem Rückkühler zu führen. Wie bereits erläutert, kann der Kühlluftstrom axialer Richtung entlang des Rotors geführt werden. Danach kann der Kühlluftstrom in Richtung des Rückkühlers geführt werden. Dabei kann es auch vorgesehen sein, dass der Kühlluftstrom ausgehend von dem Rotor zu dem den Wickelköpfen des Stators oder Teilen des Stators geführt wird. Somit kann auch der Stator zumindest teilweise gekühlt werden.

Bevorzugt ist die Steuereinrichtung dazu ausgelegt, eine Temperatur der Permanentmagnete zu bestimmen und die Kühlleistung in Abhängigkeit von der Temperatur der Permanentmagnete einzustellen. Somit wird es ermöglicht, die Kühlleistung, die mittels der Rotorkühlvorrichtung bereitgestellt wird, in Abhängigkeit von der aktuellen Temperatur der Permanentmagneten einzustellen. Hier kann es vorgesehen sein, dass die Permanentmagneten mittels der Rotorkühlvorrichtung nicht oder nur in geringem Umfang gekühlt werden, falls die Permanentmagnete eine verhältnismäßig geringe Temperatur aufweisen. Damit kann erreicht werden, dass sich die Permanentmagnete im Betrieb der elektrischen Maschine erwärmen, wodurch die Polradspannung reduziert werden kann. Falls sich die Permanentmagneten im Betrieb der elektrischen Maschine erwärmt haben, kann die Kühlleistung erhöht werden, um die Permanentmagneten entsprechend zu kühlen. Damit können der Fluss der Magnete besser genutzt und die Magnete vor Entmagnetisierung geschützt werden.

Vorzugsweise ist die Steuereinrichtung dazu ausgelegt, eine Drehzahl des Rotors, eine an dem Stator anliegende Klemmenspannung und/oder einen durch den Stator fließenden Strom zu bestimmen und die Temperatur der Permanentmagneten anhand eines Modells zu bestimmen, welches die Temperatur der Permanentmagneten in Abhängigkeit von der Drehzahl, von der Klemmenspannung und/oder von dem Strom beschreibt. Die Temperatur der Permanentmagneten ist abhängig von der Drehzahl des Rotors, der Klemmenspannung, welche an den Stator abgegriffen werden kann, und/oder von dem elektrischen Strom, welcher durch die Wicklung des Stators fließt. Diese Größen können beispielsweise mit Hilfe von entsprechenden Sensoren gemessen werden und an die Steuereinrichtung übertragen werden. In der Steuereinrichtung kann ein Modell hinterlegt sein, welches die aktuelle Temperatur der Permanentmagneten in Abhängigkeit von der gemessenen Drehzahl, der Klemmenspannung und/oder des Stroms beschreibt. Bei der Bestimmung der Temperatur der Permanentmagnete kann zudem die Temperatur in der Umgebung der elektrischen Maschine und/oder eine Betriebsdauer der elektrischen Maschine berücksichtigt werden. Dies ermöglicht eine zuverlässige Bestimmung der Temperatur der Permanentmagneten. Alternativ dazu kann es vorgesehen sein, die Temperatur der Permanentmagneten direkt mit zumindest einem Temperatursensor zu bestimmen.

Gemäß einer weiteren Ausführungsform weist die elektrische Maschine eine Statorkühlvorrichtung zum Kühlen des Stators auf. Diese Statorkühlvorrichtung kann bevorzugt durch eine Wassermantelkühlung bereitgestellt werden. Diese Wassermantelkühlung kann einer Außenseite des Stators angeordnet werden und den Stator zumindest bereichsweise umgeben. Alternativ dazu können entsprechende Kühlrohre im Blechpaket des Stators und/oder an einer Außenseite des Stators angeordnet werden. Mithilfe der Statorkühlvorrichtung kann eine effiziente Kühlung des Stators im Betrieb erreicht werden.

Wie bereits erläutert, ist die elektrische Maschine bevorzugt als permanenterregte Synchronmaschine ausgebildet. Des Weiteren ist es insbesondere vorgesehen, dass die elektrische Maschine als mittelschnelldrehender Generator ausgebildet ist beziehungsweise als solcher betrieben wird. Dies bedeutet insbesondere, dass der Generator in einem Drehzahlbereich zwischen 200 und 700 Umdrehungen pro Minute betrieben wird. Insbesondere hier ist die Wassermannkühlung in Kombination mit einem separaten Rückkühler mit Lüfter besonders vorteilhaft, da das Fördervolumen von auf der Welle montierten Lüfter nicht für ein ausreichend hohen Innenluftstrom sorgen würde. Durch diese vergleichsweise niedrige Nenndrehzahl weisen diese Generatoren häufig eine hohe Polzahl auf. Elektrische Maschinen mit hoher Polzahl haben in der Regel eine geringe Statorjochhöhe und damit eine hohe Wärmeleitfähigkeit vom Stator bis zum Wassermantel. Dies wirkt sich vorteilhaft auf die Entwärmung des Stators aus.

Eine erfindungsgemäße Generatoranordnung umfasst eine erfindungsgemäße elektrische Maschine und eine Umrichtervorrichtung zum Wandeln einer mit der elektrischen Maschine im Generatorbetrieb bereitgestellten elektrischen Spannung. Im Generatorbetrieb der elektrischen Maschine wird eine Wechselspannung bereitgestellt. Diese Wechselspannung kann mithilfe der Umrichtervorrichtung an eine Netzspannung eines Netzes, in welche die Spannung eingespeist werden soll, angepasst werden. Mithilfe der Umrichtervorrichtung kann ferner durch Feldschwächung die Klemmenspannung begrenzt werden. Zudem kann die elektrische Maschine so betrieben werden, dass keine kritischen Überdrehzahlen auftreten können, solange die Temperatur der Permanentmagneten unterhalb einer vorbestimmten Soll-Temperatur ist. Dies kann beispielsweise dadurch erreicht werden, dass die Drehzahl begrenzt wird.

Bevorzugt umfasst die Umrichtervorrichtung einen Gleichrichter, welcher elektrisch mit der elektrischen Maschine verbunden ist. Zur Kompensation der Blindleistung kann zumindest ein Kondensator an die elektrische Maschine angeschlossen sein. Mithilfe des Gleichrichters kann die Wechselspannung, die mit elektrischen Maschine bereitgestellt wird, zunächst gleichgerichtet werden. Im Anschluss daran kann die gleichgerichtete Spannung in eine Wechselspannung mit der Netzfrequenz gewandelt werden. Dabei können zusätzliche Kondensatoren zur Kompensation der Blindleistung und zur Erhöhung des Kippmoments vorgesehen werden. Diese können beispielsweise jeweils zwischen die einzelnen Phasen geschaltet sein. Durch die Kondensatoren können die Verluste reduziert werden und somit beispielsweise die Drehzahl erhöht werden.

Eine erfindungsgemäße Windkraftanlage umfasst eine erfindungsgemäße Generatoranordnung. Insbesondere bei Windkraftanlagen können infolge von Böen Drehzahlen über der Nenndrehzahl auftreten. Durch die Rotorkühlvorrichtung kann verhindert werden, dass die Permanentmagnete zu kalt sind und sich somit eine hohe Polradspannung ergibt.

Die mit Bezug auf die erfindungsgemäße elektrische Maschine vorgestellten bevorzugten Ausführungsformen und deren Vorteile gelten entsprechend für die erfindungsgemäße Generatoranordnung sowie die erfindungsgemäße Windkraftanlage.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Erfindung wird nun anhand von bevorzugten Ausführungsbeispielen sowie unter Bezugnahme auf die beigefügten Zeichnungen näher erläutert. Dabei zeigen:
- FIG 1: eine elektrische Maschine gemäß dem Stand der Technik in einer geschnittenen Seitenansicht;
- FIG 2: eine elektrische Maschine gemäß einer Ausführungsform der Erfindung in einer geschnittenen Seitenansicht; und
- FIG 3: eine schematische Darstellung einer Generatoranordnung gemäß einer Ausführungsform der Erfindung.

In den Figuren werden gleiche und funktionsgleiche Elemente mit den gleichen Bezugszeichen versehen.

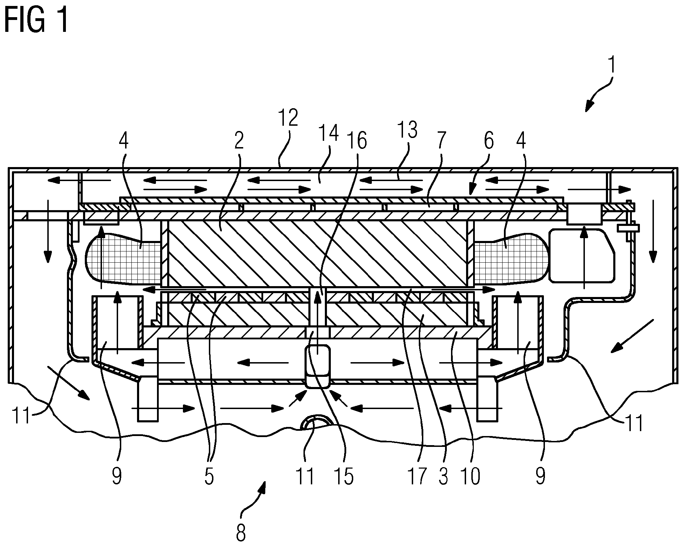

FIG 1 zeigt eine elektrische Maschine 1 gemäß dem Stand der Technik in einer geschnittenen Seitenansicht. Die elektrische Maschine 1 umfasst einen Stator 2, welcher eine Wicklung aufweist. Vorliegend sind Wickelköpfe 4 der Wicklung zu erkennen. Darüber hinaus umfasst die elektrische Maschine 1 einen Rotor 3, welcher relativ zu dem Stator 2 gedreht werden kann. Der Rotor 3 umfasst eine Mehrzahl von Permanentmagneten 5. Die elektrische Maschine 1 kann als permanenterregte Synchronmaschine ausgebildet sein. Die elektrische Maschine 1 wird bevorzugt als Generator, insbesondere in einer Windkraftanlage, eingesetzt.

Die elektrische Maschine 1 umfasst ferner eine Statorkühlvorrichtung 6, welche zum Kühlen des Stators 2 dient. Vorliegend umfasst die Statorkühlvorrichtung 6 eine Wassermantelkühlung 7, welche den Stator 2 umfangsseitig umgibt. Zudem umfasst die elektrische Maschine 1 eine Rotorkühlvorrichtung 8, welche zum Kühlen des Rotors 3 und insbesondere zum Kühlen der Permanentmagnete 5 dient. Die Rotorkühlvorrichtung 8 umfasst vorliegend zwei Lüfterelemente 9, welche drehfest mit einer Welle 10 der elektrischen Maschine 1 verbunden sind. Mithilfe der Lüfterelemente 9 kann ein Kühlluftstrom zum Kühlen des Rotors 3 bereitgestellt werden. Darüber hinaus umfasst die Rotorkühlvorrichtung 8 eine Mehrzahl von Luftleitelementen 11, welche zum Führen des Kühlluftstroms dienen. Darüber hinaus wird der Kühlluftstrom auch durch Teile des Gehäuses 12 der elektrischen Maschine 1 geführt. Vorliegend ergeben sich in einem Innenraum des Gehäuses 12 zwei gegenläufige Kühlluftströme, welche durch die Pfeile 13 veranschaulicht sind.

Der Kühlluftstrom wird von den jeweiligen Lüfterelementen 9 an den Wickelköpfen 4 des Stators 2 und Teilen des Stators 2 vorbei geleitet. Anschließend wird der Kühlluftstrom durch einen Kanal 14 geleitet, wobei hier der Kühlluftstrom in dem Kanal 14 an der Wasserkühlung 7 entlang geleitet wird und somit abgekühlt wird. Dann wird der Kühlluftstrom durch das Gehäuse 12 sowie das Luftleitelement 11 in radialer Richtung r der elektrischen Maschine 1 und anschließend in axialer Richtung a der elektrischen Maschine 1 abgelenkt. Danach wird der Kühlluftstrom wieder in radialer Richtung r derart zu dem Rotor 3 abgelenkt, dass dieser auf einen Mittelbereich 15 des Rotors 3 trifft. In dem Mittelbereich 15 weist der Rotor 3 beziehungsweise ein Blechpaket des Rotors 3 einen Kanal 16 auf, welcher sich in radialer Richtung r erstreckt. Von der Mitte beziehungsweise dem Mittelbereich 15 des Rotors 3 wird dann der Kühlluftstrom wieder in axialer Richtung a nach außen geführt. Die elektrische Maschine 1 weist hierzu einen Kühlkanal 17, durch welchen der Kühlluftstrom in axialer Richtung a geführt wird. Vorliegend ist dieser Kühlkanal 17 durch einen Luftspalt zwischen dem Stator 2 und dem Rotor 3 gebildet. Alternativ oder zusätzlich kann in dem Blechpaket des Rotors ein Kühlkanal zu Führen des Kühlluftstroms in axialer Richtung a vorgesehen sein.

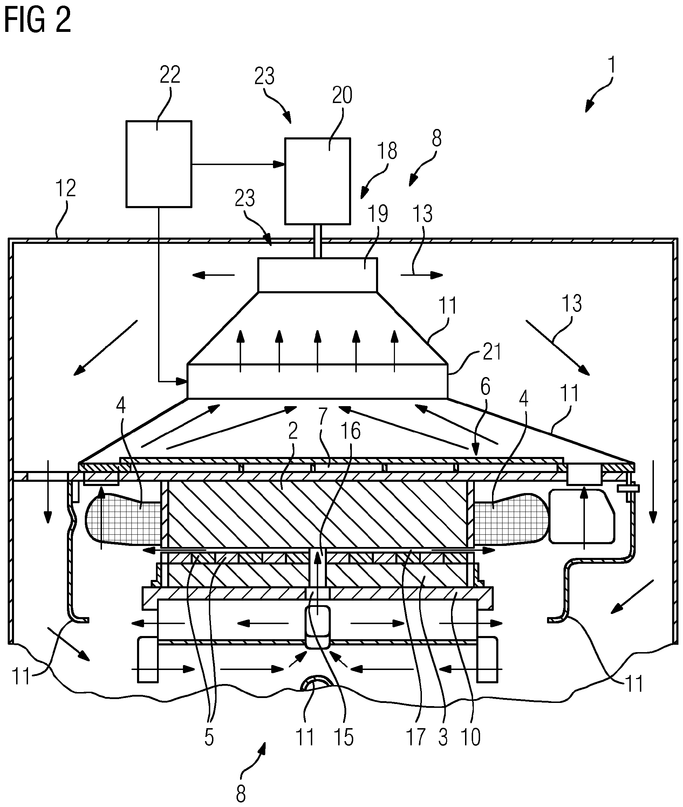

FIG 2 zeigt eine elektrische Maschine 1 gemäß einer Ausführungsform der Erfindung in einer geschnittenen Seitenansicht. Die elektrische Maschine 1 unterscheidet sich von der elektrischen Maschine 1 gemäß FIG 1 bezüglich der Rotorkühlvorrichtung 8. In diesem Fall weist die Rotorkühlvorrichtung 8 keine Lüfterelemente 9 auf, welche mit der Welle 10 verbunden. Hier weist die Rotorkühlvorrichtung 8 einen Lüfter 18 auf, welcher wiederum ein Lüfterrad 19 sowie einen Lüftermotor 20 umfasst. Darüber hinaus umfasst die Rotorkühlvorrichtung 8 einen Rückkühler 21, welcher beispielsweise als Wärmetauscher ausgebildet sein kann. Der Lüfter 18 und der Rückkühler 21 sind Kühleinrichtungen 23 der Rotorkühlvorrichtung 8, mit denen der Kühlluftstrom bereitgestellt werden kann.

Die Rotorkühlvorrichtung 8 umfasst ferner eine Steuereinrichtung 22, mittels welcher der Lüftermotor 20 des Lüfters 18 angesteuert werden kann. Mittels der Steuereinrichtung 22 kann der Lüftermotor 20 aktiviert und deaktiviert werden. Auf diese Weise kann der Volumenstrom des Kühlluftstroms beeinflusst werden. Darüber hinaus kann eine Drehzahl des Lüftermotors 20 mithilfe der Steuereinrichtung 22 eingestellt werden. Des Weiteren kann der Rückkühler 21 mittels der Steuereinrichtung 22 angesteuert werden. Auf diese Weise kann die Kühlleistung, mittels welcher der Kühlluftstrom durch den Rückkühler 21 gekühlt wird, beeinflusst werden. Insgesamt kann der Kühlluftstrom beziehungsweise die Innenumluft durch die Ansteuerung des Lüfters 18 und/oder des Rückkühlers 21 beeinflusst werden. Damit kann die Kühlleistung, mit welcher die Permanentmagnete 5 durch den Kühlluftstrom gekühlt werden, eingestellt werden.

Vorliegend wird der Kühlluftstrom von dem Rotor 3 an den Wickelköpfen 4 vorbei zu dem Rückkühler 21 geführt. Hier kann der Kühlluftstrom, der durch den Rotor 3 erwärmt wurde, abgekühlt werden. Zum Führen des Kühlluftstroms zu dem Rückkühler 21 sind entsprechende Luftleitelemente 11 vorgesehen. Im Anschluss daran gelangt der Kühlluftstrom zu den Lüfter 18 und wird von diesem zunächst in axialer Richtung a und anschließend in axialer Richtung r entlang des Gehäuses 12 geführt. Danach trifft der Kühlluftstrom - wie bereits zuvor im Zusammenhang mit FIG 1 erläutert - mittig auf den Rotor 3, um den Rotor und insbesondere die Permanentmagneten 5 zu kühlen.

Bei der elektrischen Maschine 1 gemäß FIG 2 ist die Kühlleistung, die mit der Rotorkühlvorrichtung 8 erbracht wird, unabhängig von der Drehzahl der elektrischen Maschine 1. Des Weiteren ist die Kühlleistung der Rotorkühlvorrichtung 8 weitestgehend unabhängig von der Statorkühlvorrichtung 6. Durch die Trennung der Wassermantelkühlung 7 der Statorkühlvorrichtung 6 und der Innenumluft, welche durch die Rotorkühlvorrichtung 8 bereitgestellt wird, können die Erwärmung von Stator 2 und Rotor 3 weitestgehend getrennt voneinander gesteuert werden. Durch die Kühlung des Stators 2 können Verluste reduziert werden. Dabei ist im Allgemeinen eine möglichst gute Kühlung für den Stator 2 wünschenswert.

Die Kühlung des Rotors 3 durch die Rotorkühlvorrichtung 8 kann in Abhängigkeit von der aktuellen Temperatur der Permanentmagnete 5 gesteuert werden. Beispielsweise kann die Innenumluft zur Kühlung der Permanentmagnete 5 verringert werden, wenn die Permanentmagnete 5 eine verhältnismäßig geringe Temperatur beziehungsweise eine Temperatur unterhalb einer vorbestimmten Soll-Temperatur aufweisen. Dies kann vorliegend dadurch erreicht werden, dass der Lüftermotor 20 mittels der Steuereinrichtung 22 derart gesteuert wird, dass der Lüftermotor 20 deaktiviert wird oder die Drehzahl des Luftmotors 20 reduziert wird. Es kann auch vorgesehen sein, dass die Steuereinrichtung 22 den Rückkühler 21 derart ansteuert, dass die von dem Rückkühler 21 bereitgestellte und auf den Kühlluftstrom wirkende Kühlleistung reduziert wird. Somit kann erreicht werden, dass sich die Permanentmagnete 5 im Betrieb deutlich erwärmen und damit die Polradspannung reduziert wird. Falls die Permanentmagnete 5 eine ausreichend hohe Temperatur erreicht haben, können diese entsprechend mittels der Rotorkühlvorrichtung 8 gekühlt werden, um Verluste zu reduzieren. Diese Verluste im Rotor 3 sind im Wesentlichen nur von der Drehzahl abhängig.

Die elektrische Maschine 1 kann nun so betrieben werden, dass keine kritischen Überdrehzahlen auftreten können, solange die Permanentmagnete 5 eine verhältnismäßig geringe Temperatur aufweisen. Die Steuereinrichtung 22 kann die von der Rotorkühlvorrichtung 8 bereitgestellte Kühlleistung zu dem in Abhängigkeit von der aktuellen Temperatur der Permanentmagneten 5 einstellen. Zu diesem Zweck kann die Steuereinrichtung 22 Messgrößen empfangen, welche die Klemmenspannung an dem Stator 2, einen durch die Wicklung des Stators 2 fließenden elektrischen Strom und/oder die Drehzahl des Rotors 3 beschreiben. Diese Messgrößen können bestimmt und/oder gemessen werden und an die Steuereinrichtung 22 übertragen werden. Anhand dieser Messgrößen kann auf Grundlage eines Modells dann die aktuelle Temperatur der Permanentmagnete 5 bestimmt werden. Alternativ dazu kann ein Temperatursensor verwendet werden, um die aktuelle Temperatur der Permanentmagneten 5 zu bestimmen. Durch das Verringern der von der Rotorkühlvorrichtung 8 aufgebrachten Kühlleistung können die Permanentmagnete 5 erwärmt werden und die elektrische Maschine 1 kann so betrieben werden, dass hohe über Drehzahlen auftreten können.

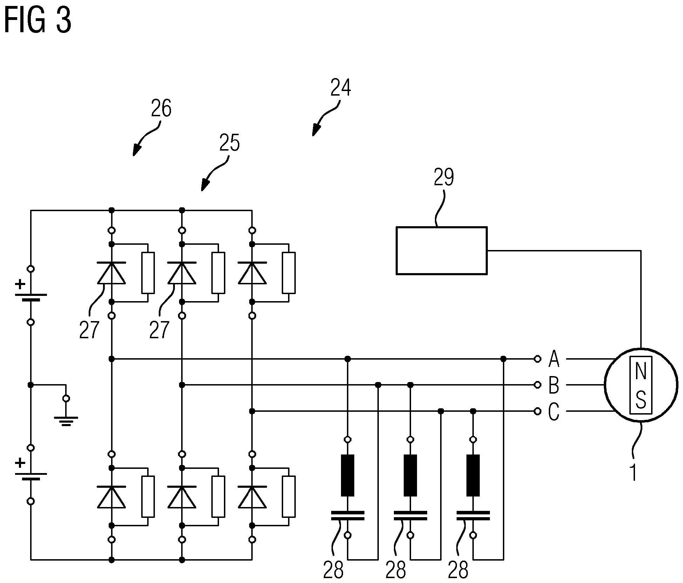

Besonders vorteilhaft ist dieser Effekt, wenn die elektrische Maschine 1 an einem Gleichrichter 25 betrieben wird. Hierzu zeigt FIG 3 eine schematische Darstellung einer Generatoranordnung 24. Die Generatoranordnung 24 umfasst die elektrische Maschine 1, wobei die elektrische Maschine 1 beziehungsweise der Stator 2 die Anschlüsse A, B und C umfasst. Wenn die elektrische Maschine 1 im Generatorbetrieb betrieben wird, kann an den Anschlüssen A, B, C jeweils eine Wechselspannung abgegriffen werden.

Die elektrische Maschine 1 ist mit dem Gleichrichter 25 verbunden, welcher zum Gleichrichten der Wechselspannungen dient. Der Gleichrichter 25 ist als Brückengleichrichter ausgebildet und umfasst sechs Dioden 27. Der Gleichrichter 25 ist Teil einer Umrichtervorrichtung 26, welche zudem einen Wechselrichter aufweisen kann, mittels welchem die Gleichspannung am Ausgang des Gleichrichters 24 in eine Netzspannung mit einer Netzfrequenz gewandelt werden kann. Somit kann die Netzspannung in ein Stromnetz eingespeist werden. Zudem umfasst die Generatoranordnung 24 die Einrichtung 29, mittels welcher die Drehzahl des Rotors 3 erfasst werden kann. Darüber hinaus umfasst die Generatoranordnung 24 drei Kondensatoren 28 wobei jeweils einer der Kondensatoren 28 zwischen zwei Anschlüsse A, B, C geschaltet ist. Durch die Kondensatoren 28 kann eine Kompensation der Blindleistung und eine Erhöhung des Kippmoments erreicht werden.

Die erfindungsgemäße Generatoranordnung 24 beziehungsweise die erfindungsgemäße elektrische Maschine 1 kann insbesondere für Windkraftanlagen verwendet werden. Hier können infolge von Böen Überdrehzahlen auftreten. Durch die unabhängige Rotorkühlvorrichtung 8 kann verhindert werden, dass die Permanentmagnete 5 eine zu geringe Temperatur aufweisen und somit hohe Polradspannungen entstehen. Damit kann eine Beschädigung des Geleichrichters 25 verhindert werden.

## Patentansprüche

1. Elektrische Maschine (1), mit einem Stator (2) und einem relativ zu dem Stator (2) drehbaren Rotor (3), wobei der Rotor (3) eine Mehrzahl von Permanentmagneten (5) umfasst, und mit einer Rotorkühlvorrichtung (8) zum Kühlen des Rotors (3), wobei die Rotorkühlvorrichtung (8) zumindest eine Kühleinrichtung (23) zum Bereitstellen eines Kühlluftstroms aufweist, **dadurch gekennzeichnet , dass** die Rotorkühlvorrichtung (8) eine Steuereinrichtung (22) aufweist, welche dazu ausgelegt ist, die zumindest eine Kühleinrichtung (23) zum Einstellen einer durch den Kühlluftstrom bereitgestellten Kühlleistung anzusteuern.

2. Elektrische Maschine (1) nach Anspruch 1, wobei die Rotorkühlvorrichtung (8) als die zumindest eine Kühleinrichtung (23) einen Lüfter (18) mit einem Lüfterrad (19) zum Fördern des Kühlluftstroms und einen Lüftermotor (20) zum Antreiben des Lüfterrads (19) aufweist, wobei die Steuereinrichtung (22) dazu ausgelegt ist, den Lüftermotor (20) zum Einstellen der Kühlleistung anzusteuern.

3. Elektrische Maschine (1) nach Anspruch 1 oder 2, wobei die Rotorkühlvorrichtung (8) als die zumindest eine Kühleinrichtung (23) einen Rückkühler (21) zum Kühlen des Kühlluftstroms aufweist, wobei Steuereinrichtung (22) dazu ausgelegt ist, den Rückkühler (21) zum Einstellen der Kühlleistung anzusteuern.

4. Elektrische Maschine (1) nach Anspruch 3, wobei die Rotorkühlvorrichtung (8) zumindest ein Luftleitelement (11) aufweist, welches den durch den Rückkühler (21) gekühlten Kühlluftstrom zu dem Rotor (3) führt.

5. Elektrische Maschine (1) nach Anspruch 4, wobei das zumindest eine Luftleitelement (11) dazu ausgelegt ist, den Kühlluftstrom in radialer Richtung (r) der elektrischen Maschine (1) zu einen Mittelbereich (15) des Rotors (3) zu führen.

6. Elektrische Maschine (1) nach Anspruch 4 oder 5, wobei die elektrische Maschine (1) zumindest einen Kühlkanal (17) aufweist, welcher den zu dem Rotor (3) geführten Kühlluftstrom in axialer Richtung (a) der elektrischen Maschine (1) entlang des Rotors (3) führt.

7. Elektrische Maschine (1) nach einem der Ansprüche 4 bis 6, wobei das zumindest eine Luftleitelement (11) dazu ausgelegt ist, den Kühlluftstrom von dem Rotor (3) zu dem Rückkühler (21) zu führen.

8. Elektrische Maschine (1) nach einem der vorhergehenden Ansprüche, wobei die Steuereinrichtung (22) dazu ausgelegt ist, eine Temperatur der Permanentmagnete (5) zu bestimmen und die Kühlleistung in Abhängigkeit von der Temperatur der Permanentmagnete (5) einzustellen.

9. Elektrische Maschine (1) nach Anspruch 8, wobei die Steuereinrichtung (22) dazu ausgelegt ist, eine Drehzahl des Rotors (3), eine an dem Stator (2) anliegende Klemmenspannung und/oder einen durch den Stator (2) fließenden Strom zu bestimmen und die Temperatur der Permanentmagnete (5) anhand eines Modells zu bestimmen, welches die Temperatur der Permanentmagnete (5) in Abhängigkeit von der Drehzahl, von der Klemmenspannung und/oder von dem Strom beschreibt.

10. Elektrische Maschine (1) nach einem der vorhergehenden Ansprüche, wobei die elektrische Maschine (1) eine Statorkühlvorrichtung (6) zum Kühlen des Stators (2) aufweist.

11. Generatoranordnung (24) mit einer elektrischen Maschine (1) nach einem der vorhergehenden Ansprüche und mit einer Umrichtervorrichtung (26) zum Wandeln einer mit der elektrischen Maschine (1) im Generatorbetrieb bereitgestellten elektrischen Spannung.

12. Generatoranordnung (24) nach Anspruch 11, wobei die Umrichtervorrichtung (26) einen Gleichrichter (25), welcher elektrisch mit der elektrischen Maschine (1) verbunden ist, und zumindest einen Kondensator (28) zur Kompensation einer Blindleistung umfasst.

13. Windkraftanlage mit einer Generatoranordnung (24) nach Anspruch 11 oder 12.
